# EUROPÄISCHE PATENTSCHRIFT

(11) **EP 1 770 838 B1**
(45) Veröffentlichungstag und Bekanntmachung des Hinweises auf die Patenterteilung: **02.03.2011**
(21) Anmeldenummer: 06019971.8
(22) Anmeldetag: 25.09.2006
(51) Int. Cl.: H02B 1/01

(54) **Profil für ein Rahmengestell eines Schaltschranks**
Profile of an electrical cabinet frame
Rail profilé pour un châssis d'une armoire électrique

(30) Priorität: 29.09.2005 DE 102005046851; 10.11.2005 DE 102005053583; 25.01.2006 DE 102006003771
(43) Veröffentlichungstag der Anmeldung: 04.04.2007
(73) Patentinhaber: Hager Electro GmbH & Co. KG, 66440 Blieskastel (DE)
(72) Erfinder: Cubela, Tomislav, 6300 Zug (CH); Christen, Reto, 6012 Obernau (CH); Chrim, Mahmoud, 33074 Fontanafredda/ Pordenone (IT)
(74) Vertreter: Bernhardt, Reinold

(56) Entgegenhaltungen:
- DE-C1- 19 536 950
- US-A1- 2002 121 387

## Beschreibung

Die Erfindung betrifft ein Profil zur Bildung von Rahmenschenkeln eines Trägergestells für einen Schalt- oder Verteilerschrank, wobei die Rahmenschenkel entlang den Ecken des Schrankinnenraums verlaufen, das Profil zumindest zwei Kammern mit zur Anlage an je einer der beiden in der Ecke zusammenlaufenden Wänden des Schrankes vorgesehenen, zu den Wänden parallelen Profilabschnitten aufweist, die durch einen der Schrankecke zugewandten äußeren Verbindungsabschnitt und einen dem Schrankinnenraum zugewandten inneren Verbindungsabschnitt verbunden sind.

In der Patentschrift DE 195 36 950 C1 sind solche Profile mit zwei über einen Verbindungsabschnitt miteinander verbundene Kammern beschrieben, deren Seiten mehrfach abgekantet sind und die Profilabschnitte aufweisen, die zur Anlage an den Wänden eines Schalt- oder Verteilerschranks vorgesehen sind.

Die US 2002/121387 A1 zeigt ein Profil, bei dem sich die Profilabschnitte so berühren, dass drei nebeneinander angeordnete Kammern gebildet sind. Die mittlere Kammer weist einen rechteckigen, zu den Wänden des Schrankes parallelen Querschnitt auf und ist zum Schrankinneren hin offen. Das Profil ist zur Anlage an der Schrankinnenwand mit von den äußeren Kammern abstehenden Stegen versehen.

Ferner sind aus der EP 0 751 595 B1 Profile bekannt, deren äußerer Verbindungsabschnitt im Abstand zur Schnittlinie der sich an der Ecke schneidenden Wandebenen verläuft, so dass Freiraum für die Unterbringung z. B. von Scharnieren oder Randabkantungen von Wandelementen besteht. Am inneren Verbindungsabschnitt sind Befestigungsaufnahmen in Form von Lochreihen für die Anbringung von Inneneinbauten gebildet.

Der Erfindung liegt die Aufgabe zugrunde, ein neues Profil der eingangs erwähnten Art zu schaffen, das den in Schaltschränken mit Rahmengestellen bestehenden Anforderungen, insbesondere Belastungen der Rahmenschenkel, besser gerecht wird.

Das diese Aufgabe lösende Profil nach der Erfindung ist dadurch gekennzeichnet, dass drei Kammern gebildet sind, von denen zumindest eine einen rechteckigen Querschnitt aufweist, und der äußere Verbindungsabschnitt den inneren an der Außenkante einer rechtwinkligen Abkantung des äußeren und der Außenkante einer rechtwinkligen Abkantung des inneren Verbindungsabschnitts berührt.

Vorteilhaft stützen sich die Verbindungsabschnitte an den Berührungsstellen aneinander ab, was dem Profil eine hohe Stabilität verleiht. Die genannte Berührung schließt dementsprechend auch geringfügige Abstände zwischen den Verbindungsabschnitten an den Berührungsstellen in dem Sinne ein, dass es zu einer tatsächlichen Berührung nur unter Belastung kommt.

Die Stabilität des Profils lässt sich noch weiter steigern, wenn entsprechend einer Ausführungsform der Erfindung die Verbindungsabschnitte an den Berührungsstellen miteinander verbunden, z. B. verschweißt werden.

In einer bevorzugten Ausführungsform der Erfindung weisen zwei der Kammern einen rechteckigen Querschnitt auf und nur eine mittlere, zwischen den zwei rechteckigen Kammern gelegene Kammer weist im Querschnitt von der Rechteckform ab.

Die Winkelhalbierende der Abkantung des äußeren Verbindungsabschnitts und die Winkelhalbierende der Abkantung des inneren Verbindungsabschnitts können zusammenfallen oder zueinander versetzt, vorzugsweise parallel versetzt, angeordnet sein.

Vorzugsweise ist das Profil symmetrisch zur Winkelhalbierenden der Schrankecke ausgebildet.

Der äußere Verbindungsabschnitt kann einen die Winkelhalbierenden der Schrankecke senkrecht schneidenden Teilabschnitt aufweisen, an welchem ggf. Befestigungsaufnahmen gebildet sind.

In einer weiteren Ausführungsform der Erfindung weist der innere Verbindungsabschnitt im Bereich der mittleren Kammer eine Unterbrechung auf, so dass die mittlere Kammer zum Schrankinneren hin geöffnet ist.

In einer alternativen Ausführungsform ist das Profil zur Winkelhalbierenden der Schrankrecke symmetrisch und in drei zueinander offene Kammern unterteilt, in dem sich der innere Abschnitt und der äußere Abschnitt dadurch nahe kommen, dass sich an die der Ecke nahen Enden der beiden Profilabschnitte jeweils ein um mehr als 90° zum Schrankinnenraum hin abgewinkelter Profilabschnitt anschließt und die um mehr als 90° abgewinkelten Profilabschnitte im Abstand zu einem dem Schrankinnenraum zugewandten Abschnitt enden, welcher die beiden Profilabschnitte an den der Schrankecke fernen Enden verbindet. An die abgewinkelten Profilabschnitte schließt sich ein weiterer, zu der betreffenden Wand paralleler Profilabschnitt an, wobei die der Schrankecke zugewandten Enden dieser weiteren Profilabschnitte durch einen sich an die letztgenannten Abschnitte anschließenden und zur Winkelhalbierenden der Schrankecke senkrechten Profilabschnitt verbunden sein können.

Der genannte, dem Schrankinnenraum zugewandte Profilabschnitt kann im Vergleich zu einem quadratischen Querschnittsprofil wenigstens teilweise zur Schrankecke hin zurückversetzt sein.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: ein Profil nach der Erfindung in einem Querschnitt,
- Fig. 2: einen Ausschnitt einer Längsseite des Profils von Fig. 1,
- Fig. 3 bis 5: weitere Ausführungsbeispiele für Profile nach der Erfindung in einem Querschnitt,
- Fig. 6: ein fünftes Ausführungsbeispiel für ein Profil nach der Erfindung in einer Teilansicht,
- Fig. 7: ein sechstes Ausführungsbeispiel für ein Profil nach der Erfindung in einem Querschnitt,
- Fig. 8: eine perspektivische Teilansicht des Profils von Fig. 7, und
- Fig. 9 und 10: weitere Ausführungsbeispiele für Profile nach der Erfindung.

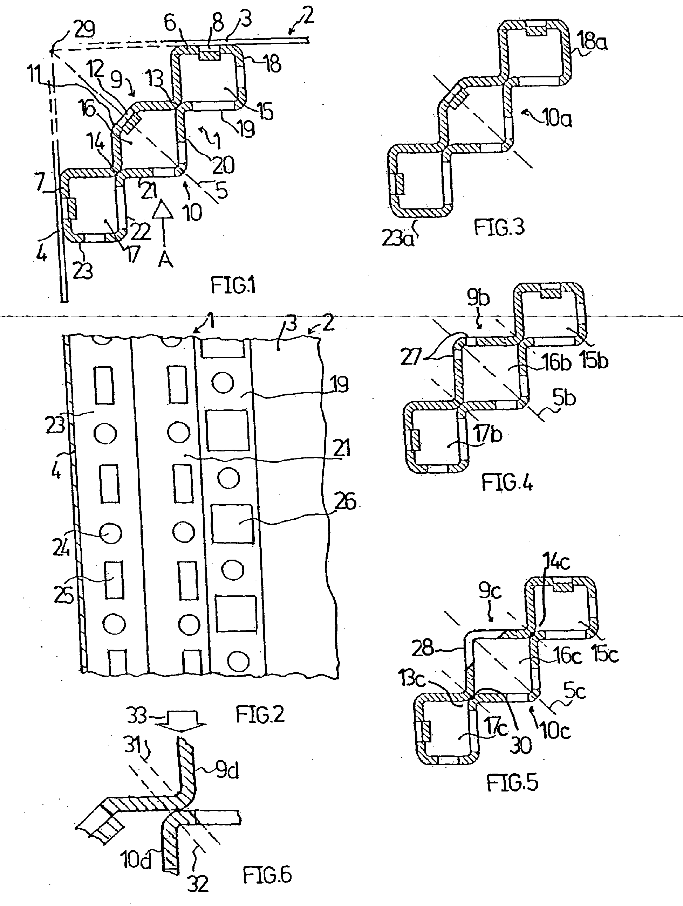

Ein in Fig. 1 dargestelltes Profil bildet einen vertikalen Rahmenschenkel 1 eines im übrigen nicht gezeigten Rahmengestells für einen Schaltschrank 2. Der Rahmenschenkel 1 ist in einer Schrankecke angeordnet, an welcher die Ebenen zueinander rechtwinkliger Wände 3 und 4 des Schaltschranks 2 in einer vertikalen Schnittlinie 29 zusammentreffen.

Das zur Winkelhalbierenden 5 der Schrankwandecke symmetrische Profil weist Profilabschnitte 6 und 7 auf, welche nach außen gewandt sind und jeweils parallel zur Ebene der Wand 3 bzw. 4 verlaufen. Befestigungsöffnungen 8 in den Profilabschnitten 6 und 7 dienen der Verbindung mit der betreffenden Wand oder/und der Verbindung mehrerer Schaltschränke untereinander.

Die Profilabschnitte 6 und 7 sind über einen der Schrankecke zugewandten äußeren Verbindungsabschnitt 9 und einen dem Schrankinnenraum zugewandten inneren Verbindungsabschnitt 10 zu einem geschlossenen Profil verbunden.

Der innere Verbindungsabschnitt 9 verläuft unter Belassung eines Freiraums im Bereich der Schrankecke im Abstand von der Schnittlinie 29. Ein Teilabschnitt 11 des Verbindungsabschnitts 9 schneidet die Winkelhalbierende 5 senkrecht und weist für Befestigungen nutzbare Öffnungen 12 auf.

Außer an den Übergängen zu dem Teilabschnitt 11 sind sowohl in dem äußeren Verbindungsabschnitt 9 als auch dem inneren Verbindungsabschnitt 10 ausschließlich rechtwinklige Abkantungen gebildet. Bei 13 und 14 berühren sich die Verbindungsabschnitte 9 und 10 mit gerundeten Außenkanten solcher Abkantungen, wobei durch die beiden Berührungsstellen 13 und 14 drei von einander getrennte Hohlkammern 15 bis 17 gebildet sind, von denen die Kammern 15 und 17 einen etwa rechteckigen Querschnitt aufweisen.

In dem äußeren Verbindungsabschnitt 10 sind durch insgesamt sieben rechtwinklige Abkantungen sechs im Querschnitt geradlinige Teilabschnitte 18 bis 23 gebildet, von denen in Fig. 2 die Teilabschnitte 19, 21 und 23 sichtbar sind. Die Teilabschnitte 19 bis 23 weisen Lochreihen aus Rundlöchern 24 und Langlöchern 25 bzw. quadratischen Löchern 26 auf. Es versteht sich, dass auch andere Lochformen in Betracht kommen. Durch die Berührung der Verbindungsabschnitte 9 und 10 bei 13 und 14 sind Stützstellen gebildet, die dem vorangehend beschriebenen Profil eine hohe Festigkeit verleihen, die u. a. es erlaubt, die vielfältigen Möglichkeiten zur Befestigung von Inneneinbauten an den Teilabschnitten 18 bis 23 zu nutzen. Darüber hinaus wirkt sich diese Festigkeit vorteilhaft bei seitlicher Aneinanderkopplung von Schaltschränken aus. Durch die Abstützung an den Berührungsstellen 13 und 14 vermag das Profil große seitlich einwirkende Kräfte aufzunehmen.

In den folgenden Figuren sind gleiche oder gleichwirkende Teile mit derselben Bezugszahl wie in den vorangehenden Figuren bezeichnet, wobei der betreffenden Bezugszahl der Buchstabe a, b, c, d, e, f bzw. g beigefügt ist.

Ein in Fig. 3 gezeigtes Ausführungsbeispiel für ein Profil unterscheidet sich von dem vorangehenden Ausführungsbeispiel dadurch, dass Teilabschnitte 18a und 23a eines inneren Verbindungsabschnitts 10a ohne Befestigungsaufnahmen ausgebildet sind.

Ein in Fig. 4 gezeigtes Ausführungsbeispiel unterscheidet sich von dem Ausführungsbeispiel von Fig. 1 und 2 dadurch, dass ein äußerer Verbindungsabschnitt 9b ausschließlich rechtwinklige Abkantungen und keinen dem Teilabschnitt 11 entsprechenden, eine Winkelhalbierende 5b senkrecht schneidenden Teilabschnitt aufweist. Entsprechend sind drei Hohlkammern 15b bis 17b mit annähernd rechteckigem Querschnitt gebildet. Das Bezugszeichen 27 weist auf Öffnungen hin, die sich für Befestigungen nutzen lassen.

Bei dem Ausführungsbeispiel von Fig. 5 ist anstelle von zwei Öffnungen 27 eine Ausnehmung 28 gebildet, welche sich in eine Abkantung hinein erstreckt.

An Berührungsstellen 13c und 14c ist eine Verbindung zwischen dem äußeren und inneren Verbindungsabschnitt durch Schweißpunkte 30 hergestellt. Hierdurch ergibt sich eine weitere Erhöhung der Stabilität. Anstelle der Verschweißung kommen auch andere stoff- oder kraftschlüssige Verbindungen in Betracht.

Abweichend von den vorangehend gezeigten Ausführungsbeispielen könnten gemäß Fig. 6 an den Berührungsstellen die Winkelhalbierende 31 der Abkantung eines äußeren Verbindungsabschnitts 9d zur Winkelhalbierenden 32 der Abkantung eines inneren Verbindungsabschnitts 10d versetzt angeordnet sein. Dies ermöglicht seitliche Kraftübertragungen gemäß Pfeil 33.

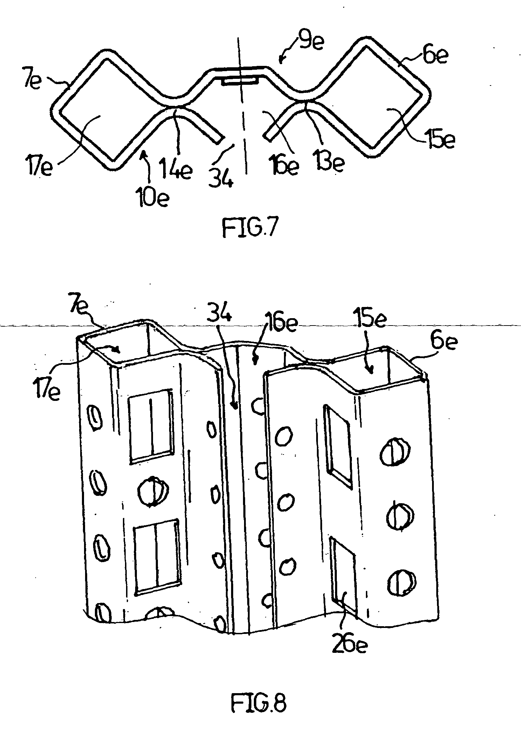

Bei dem in Fig. 7 und 8 gezeigten Ausführungsbeispiel weist ein innerer Verbindungsabschnitt 10e im Bereich einer mittleren Kammer 16e eine Unterbrechung 34 auf. Die mittlere Kammer 16e ist dadurch zum Schrankinneren hin offen.

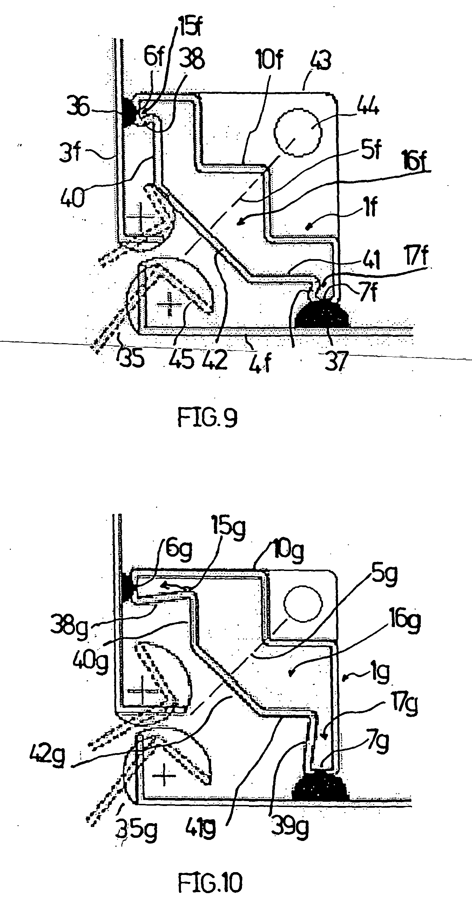

Es wird nun auf Fig.9 Bezug genommen, wo ein vertikales, einen Rahmenschenkel 1 f eines Trägergestells für einen Schaltschrank bildendes Profil einen Abschnitt 6f aufweist, welcher einer Wand 3f des Schaltschranks zugewandt und zu der Wand 3f parallel ist. Ein weiterer Abschnitt 7f des Profils erstreckt sich parallel zu einer Wand 4f des Schaltschranks, welche mit der Wand 3f an einer Schrankecke 35 einen rechten Winkel bildet.

Zwischen den Profilabschnitten 6f und 7f und den Wänden 3f und 4f ist jeweils eine Dichtung 36 bzw. 37 angeordnet.

Ein dem Schrankinnenraum zugewandter Abschnitt 10f des Profils des Rahmenschenkels 1 f, welcher die der Schrankecke 35 fernen Enden der Profilabschnitte 6f und 7f miteinander verbindet, besteht in dem gezeigten Ausführungsbeispiel aus sechs Teilabschnitten, die aufeinander folgend abwechselnd in entgegengesetzter Richtung um 90° abgewinkelt sind, wobei vier Teilabschnitte des Abschnitts 10f gegenüber der Kontur eines entsprechenden quadratischen Profilquerschnitts in Richtung zur Schrankecke 35 hin zurückversetzt verlaufen.

An die der Schrankecke 35 nahen Enden der Profilabschnitte 6f und 7f schließt sich jeweils ein Profilabschnitt 38 bzw. 39 an, welcher um mehr als 90° zum Schrankinneren hin abgewinkelt ist. Durch die Abwinklungen gebildete Verengungen unterteilen das Profil in drei Kammern 15f, 16f und 17f.

Die im Abstand zum Profilabschnitt 10f endenden Abschnitte 38 und 39 stehen jeweils in Verbindung mit einem zur Wand 3f bzw. Wand 4f parallelen Abschnitt 40 bzw. 41. Die der Ecke 35 nahen Enden der Abschnitte 40 und 41 sind über einen die Winkelhalbierende 5f der Ecke 35 senkrecht schneidenden Abschnitt 42 miteinander verbunden, wobei das den Rahmenschenkel 1f bildende Trägerprofil symmetrisch zur Winkelhalbierenden 5f ausgebildet ist.

Das Bezugszeichen 43 weist auf ein Verbindungsstück hin, über welches der vertikale Rahmenschenkel 1f mit zwei weiteren, zueinander und zu dem vertikalen Rahmenschenkel 1f senkrechten Trägerprofilen des Trägergestells verbindbar ist. Eine Durchgangsbohrung 44 in dem Verbindungsstück erlaubt eine Schraubverbindung des Trägergestells z.B. mit einem Trägersockel des Schaltschanks.

Durch die ummehr als 90° abgewinkelten Abschnitte 6f und 7f besteht bei der Schrankmontage die Möglichkeit, Wandteile mit Endabwinklungen 45 vorübergehend am Trägergestell einzuhängen.

Das Ausführungsbeispiel von Fig. 10 unterscheidet sich von dem Ausführungsbeispiel von Fig. 9 dadurch, dass um mehr als 90° abgewinkelte Profilabschnitte 38g und 39g länger als die Abschnitte 38 und 39 des vorangehend beschriebenen Ausführungsbeispiels sind. Ferner weist das in Fig. 10 gezeigte Rahmenschenkelprofil 1 g einen dem Innenraum zugewandten Profilabschnitt 10g auf, von dem nur zwei Teilabschnitte gegenüber einem entsprechenden quadratischen Profil in Richtung zur Schrankecke 35g hin zurückversetzt sind.

## Patentansprüche

1. Profil zur Bildung von Rahmenschenkeln (1) eines Trägergestells für einen Schalt- oder/und Verteilerschrank (2), wobei die Rahmenschenkel (1) entlang den Ecken des Schrankinnenraums verlaufen, das Profil zumindest zwei Kammern (15-17) mit zur Anlage an je einer der beiden in der Ecke zusammenlaufenden Wänden (3,4) des Schrankes (2) vorgesehenen, zu den Wänden (3,4) parallelen Profilabschnitten (6,7) aufweist, die durch einen der Schrankecke zugewandten äußeren Verbindungsabschnitt (9) und einen dem Schrankinnenraum zugewandten inneren, durchgehenden oder unterbrochenen Verbindungsabschnitt (10) verbunden sind,
**dadurch gekennzeichnet,**
**dass** drei Kammern (15-17) gebildet sind, von denen zumindest eine einen rechteckigen Querschnitt aufweist, und der äußere Verbindungsabschnitt (9) den inneren (10) an der Außenkante einer rechtwinkligen Abkantung des äußeren und der Außenkante einer rechtwinkligen Abkantung des inneren Verbindungsabschnitts (10) berührt.

2. Profil nach Anspruch 1,
**dadurch gekennzeichnet,**
**dass** wenigstens eine (15,17) der Kammern (15-17) einen rechteckigen Querschnitt aufweist.

3. Profil nach Anspruch 1 oder 2,
**dadurch gekennzeichnet,**
**dass** die Winkelhalbierende (31) der Abkantung des äußeren Verbindungsabschnitts (9d) und die Winkelhalbierende (32) der Abkantung des inneren Verbindungsabschnitts (10d) zusammenfallen oder zueinander versetzt sind, vorzugsweise parallel versetzt.

4. Profil nach einem der Ansprüche 1 bis 3
**dadurch gekennzeichnet,**
**dass** die beiden Verbindungsabschnitte (9c,10c) an der Berührungsstelle (13c, 14c) miteinander verbunden sind.

5. Profil nach Anspruch 4,
**dadurch gekennzeichnet,**
**dass** die Verbindungsabschnitte (9c,10c) an der Berührungsstelle (13,c, 14c) miteinander verschweißt sind.

6. Profil nach einem der Ansprüche 1 bis 5,
**dadurch gekennzeichnet,**
**dass** Teilabschnitte (18 - 23) des inneren Verbindungsabschnitts (10) Reihen von Befestigungsaufnahmen, insbesondere Lochreihen, aufweisen:

7. Profil nach einem der Ansprüche 1 bis 6,
**dadurch gekennzeichnet,**
**dass** der innere Verbindungsabschnitt (10e) im Bereich der mittleren Kammer (16e) eine Unterbrechung (34) aufweist.

8. Profil nach einem der Ansprüche 1 bis 7,
**dadurch gekennzeichnet,**
**dass** das Profil symmetrisch zur Winkelhalbierenden (5) der Schrankecke ausgebildet ist.

9. Profil nach einem der Ansprüche 1 bis 8,
**dadurch gekennzeichnet,**
**dass** der äußere Verbindungsabschnitt (9) einen die Winkelhalbierende (5) der Schrankecke senkrecht schneidenden Teilabschnitt (11) aufweist.

10. Profil zur Bildung von Rahmenschenkeln (1) eines Trägergestells für einen Schalt- oder Verteilerschrank (2), wobei die Rahmenschenkel (1) entlang den Ecken des Schrankinnenraums verlaufen, das Profil den beiden in der Ecke zusammenlaufenden Wänden des Schrankes (2) zugewandte, zu den Wänden (3f,4f) parallele Profilabschnitte (6f,7f;6g,7g) aufweist, die durch einen der Schrankecke zugewandten äußeren Verbindungsabschnitt (40,41;40g,41 g) und einen dem Schrankinnenraum zugewandten inneren, durchgehenden oder unterbrochenen Verbindungsabschnitt (10f;10g) verbunden sind, wobei das Profil in drei Kammern (15f-17f;15g-17g) unterteilt ist, indem sich der innere Abschnitt (10f;10g) und der äußere Abschnitt (40,41;40g,41g) dadurch nahe kommen, dass sich an die der Ecke nahen Enden der beiden Profilabschnitte (6f,7f;6g,7g) jeweils ein um mehr als 90° zum Schrankinnenraum hin abgewinkelter Profilabschnitt (38,39;38g,39g) anschließt,
**dadurch gekennzeichnet,**
**dass** die Kammern (15f-17f;15g-17g) zueinander offen sind und das Profil zur Winkelhalbierenden (5f;5g) der Schrankecke (35;35g) symmetrisch ist, sich an die um mehr als 90° abgewinkelten Profilabschnitte (38,39; 38g,39g) ein weiterer, zu der betreffenden Wand (3f, 4f; 3g,4g) paralleler Profilabschnitt (40,41; 40g,41 g) anschließt und die weiteren Profilabschnitte (40,41; 40g,41 g) durch einen sich an den letztgenannten Abschnitt (40,41;40g,41g) anschlieβenden und zur Winkelhalbierenden (5f; 5g) der Schrankecke (35; 35g) senkrechten Profilabschnitt (42; 42g) verbunden sind.

11. Profil nach Anspruch 10,
**dadurch gekennzeichnet,**
**dass** die der Schrankecke (35; 35g) fernen Enden der zu den Wänden (3f,4f; 3g,4g) parallelen Abschnitt (40,41; 40g,41 g) durch einen äußeren Profilabschnitt (10f;10g) verbunden sind, welcher gegenüber einem entsprechenden quadratischen Querschnittsprofil wenigstens teilweise in Richtung zur Schrankecke (35; 35g) hin zurückversetzt ist.

## Claims

1. Profile for forming frame legs (1) of a mounting rack for a switchgear and/or distribution cabinet (2), wherein the frame legs (1) run along the corners of the cabinet internal area, the profile has at least two chambers (15-17) with profile sections (6, 7) which are intended to make contact with in each case one of the two walls (3, 4) of the cabinet (2) which run together in the corner, which profile sections (6, 7) are parallel to the walls (3,4) and are connected by means of an outer connecting section (9), which faces the cabinet corner, and an inner, continuous or interrupted connecting section (10) which faces the cabinet internal area, **characterized in that** three chambers (15-17) are formed, at least one of which has a rectangular cross section, and the outer connecting section (9) touches the inner connecting section (10) on the outer edge of a right-angled bend in the outer, and the outer edge of a right-angled bend in the inner connecting section (10).

2. Profile according to Claim 1, **characterized in that** at least one (15, 17) of the chambers (15-17) has a rectangular cross section.

3. Profile according to Claim 1 or 2, **characterized in that** the angled bisector (31) of the bend in the outer connecting section (9d) and the angled bisector (32) of the bend in the inner connecting section (10d) coincide or are offset with respect to one another, preferably offset parallel.

4. Profile according to one of Claims 1 to 3, **characterized in that** the two connecting sections (9c, 10c) are connected to one another at the touching point (13c, 14c).

5. Profile according to Claim 4, **characterized in that** the connecting sections (9c, 10c) are welded to one another at the touching point (13c, 14c).

6. Profile according to one of Claims 1 to 5, **characterized in that** subsections (18-23) of the inner connecting section (10) have rows of attachment holders, in particular rows of holes.

7. Profile according to one of Claims 1 to 6, **characterized in that** the inner connecting section (10e) has an interruption (34) in the area of the central chamber (16e).

8. Profile according to one of Claims 1 to 7, **characterized in that** the profile is designed to be symmetrical with respect to the angle bisector (5) of the cabinet corner.

9. Profile according to one of Claims 1 to 8, **characterized in that** the outer connecting section (9) has a subsection (11) which intersects the angle bisector (5) of the cabinet corner at right angles.

10. Profile for forming frame legs (1) of a mounting rack for a switchgear or distribution cabinet (2), wherein the frame legs (1) run along the corners of the cabinet internal area, the profile has profile sections (6f, 7f; 6g, 7g) which face the two walls of the cabinet (2) which run together in the corner, which profile sections (6f, 7f; 6g, 7g) are parallel to the walls (3f, 4f) and are connected by means of an outer connecting section (40, 41; 40g, 41g), which faces the cabinet corner, and an inner, continuous or interrupted, connecting section (10f; 10g) which faces the cabinet internal area, wherein the profile is subdivided into three chambers (15f-17f; 15g-17g), in that the inner section (10f; 10g) and the outer section (40, 41; 40g, 41g) can come close, such that a profile section (38, 39; 38g, 39g) which is angled through more than 90° toward the cabinet internal area is in each case connected to the ends of the two respective profile sections (6f, 7f; 6g, 7g) which are close to the corner, **characterized in that** the chambers (15f-17f; 15g-17g) are open to one another, and the profile is symmetrical with respect to the angle bisector (5f; 5g) of the cabinet corners (35; 35g), a further profile section (40, 41; 40g, 41g), which is parallel to the relevant wall (3f, 4f; 3g, 4g), is connected to the profile sections (38, 39; 38g, 39g) which are angled through more than 90°, and the further profile sections (40, 41; 40g, 41g) are connected by a profile section (42; 42g) which is connected to the last-mentioned section (40, 41; 40g, 41g) and is at right angles to the angle bisector (5f; 5g) of the cabinet corner (35; 35g).

11. Profile according to Claim 10, **characterized in that** those ends which are remote from the cabinet corner (35; 35g) of the section (40, 41; 40g, 41g) which is parallel to the walls (3f, 4f; 3g, 4g) are connected by means of an outer profile section (10f; 10g) which is at least partially set back in the direction of the cabinet corner (35; 35g) in comparison to a corresponding square cross-sectional profile.

## Revendications

1. Profilé pour la réalisation des côtés (1) d'un cadre pour un châssis porteur destiné à une armoire de commutation et/ou de distribution (2), dans lequel les cotés de cadre (1) s'étendent le long des coins du volume intérieur de l'armoire, le profilé comporte au moins deux chambres (15-17) avec des tronçons de profilé (6, 7) prévus pour venir en contact sur l'une des deux parois (3, 4), qui convergent dans le coin, de l'armoire (2) et parallèles auxdites parois (3, 4), ces tronçons étant reliés par un tronçon de liaison extérieur (9) tourné vers le coin de l'armoire et par un tronçon de liaison intérieur (10) continu ou interrompu, tourné vers le volume intérieur de l'armoire,
**caractérisé en ce que**
il est formé trois chambres (15-17), parmi lesquelles une chambre au moins présente une section rectangulaire, et le tronçon de liaison extérieur (9) touche le tronçon de liaison intérieur (10) au niveau de l'arête extérieure d'un rabattement à angle droit du tronçon de liaison extérieur ainsi que l'arête extérieure d'un rabattement à angle droit du tronçon de liaison intérieur (10).

2. Profilé selon la revendication 1,
**caractérisé en ce que** l'une au moins (15, 17) des chambres (15-17) présente une section rectangulaire.

3. Profilé selon la revendication 1 ou 2,
**caractérisé en ce que** la bissectrice (31) du rabattement du tronçon de liaison extérieur (9d) et la bissectrice (32) du rabattement du tronçon de liaison intérieur (10d) coïncident ou sont décalées l'une par rapport à l'autre, de préférence décalées de manière parallèle.

4. Profilé selon l'une des revendications 1 à 3,
**caractérisé en ce que** les deux tronçons de liaison (9c, 10c) sont reliés l'un à l'autre à l'emplacement de contact (13c, 14c).

5. Profilé selon la revendication 4,
**caractérisé en ce que** les tronçons de liaison (9c, 10c) sont soudés l'un à l'autre à l'emplacement de contact (13c, 14c).

6. Profilé selon l'une des revendications 1 à 5,
**caractérisé en ce que** des tronçons partiels (18-23) du tronçon de liaison intérieur (10) comportent des rangées de logements de fixation, en particulier des rangées de trous.

7. Profilé selon l'une des revendications 1 à 6,
**caractérisé en ce que** le tronçon de liaison intérieur (10e) comporte une interruption (34) dans la région de la chambre centrale (16e).

8. Profilé selon l'une des revendications 1 à 7,
**caractérisé en ce que** le profilé est réalisé symétriquement par rapport à la bissectrice (5) du coin de l'armoire.

9. Profilé selon l'une des revendications 1 à 8,
**caractérisé en ce que** le tronçon de liaison extérieur (9) comporte un tronçon partiel (11) qui recoupe à angle droit la bissectrice (5) du coin de l'armoire.

10. Profilé pour la réalisation des côtés (1) d'un cadre pour un châssis porteur destiné à une armoire de commutation ou de distribution (2), dans lequel les côtés de cadre (1) s'étendent le long des coins du volume intérieur de l'armoire, le profilé comporte des tronçons de profilés (6f, 7f ; 6g, 7g) tournés vers les deux parois qui convergent dans le coin et parallèles aux parois (3f, 4f), ces tronçons étant reliés par un tronçon de liaison extérieur (40, 41 ; 40g, 41g) tourné vers le coin de l'armoire et par un tronçon de liaison intérieur (10f ; 10g) continu ou interrompu, tourné vers le volume intérieur de l'armoire, le profilé étant subdivisé en trois chambres (15f-17f ; 15g-17g) du fait que le tronçon intérieur (10f ; 10g) et le tronçon extérieur (40, 41 ; 40g, 41g) se rapprochent parce qu'un tronçon de profilé (38, 39 ; 38g, 39g) rabattu sur plus de 90° vers le volume intérieur de l'armoire se raccorde respectivement aux extrémités, proches des coins, des deux tronçons de profilés (6f, 7f ; 6g, 7g),
**caractérisé en ce que**
les chambres (15f-17f ; 15g-17g) sont ouvertes les unes vers les autres et le profilé est symétrique par rapport à la bissectrice (5f ; 5g) du coin (35 ; 35g) de l'armoire, un autre tronçon de profilé (40, 41 ; 40g, 41g), parallèle à la paroi concernée (3f, 4f ; 3g, 4g) se raccorde au tronçon de profilé (38, 39 ; 38g, 39g) rabattu sur plus de 90° et les autres tronçons de profilé (40, 41 ; 40g, 41 g) sont reliés par un tronçon de profilé (42 ; 42g) qui se raccorde au dernier tronçon précité (40, 41 ; 40g, 41 g) et qui est perpendiculaire à la bissectrice (5f ; 5g) du coin de l'armoire (35 ; 35g).

11. Profilé selon la revendication 10,
**caractérisé en ce que** les extrémités, éloignées du coin de l'armoire (35 ; 35g), du tronçon (40, 41 ; 40g, 41g) parallèle aux parois (3f, 4f ; 3g, 4g) sont reliées par un tronçon de profilé extérieur (10f ; 10g) qui est en retrait par rapport au profilé de section transversale carré correspondant, au moins partiellement en direction du coin de l'armoire (35 ; 35g).
